# FASCICULE DE BREVET EUROPEEN

(11) **EP 1 835 994 B1**
(45) Date de publication et mention de la délivrance du brevet: **02.03.2011**
(21) Numéro de dépôt: 05788667.3
(22) Date de dépôt: 07.07.2005
(51) Int. Cl.: B01L 3/00, B01J 19/00

(54) **PROCÉDÉ POUR AGIR PAR CONVECTION THERMOCAPILLAIRE SUR UN FLUIDE DANS UN CIRCUIT MICROFLUIDIQUE**
VERFAHREN ZUM EINWIRKEN MITTELS THERMOKAPILLARER KONVEKTION AUF EIN FLUID IN EINER MIKROFLUIDISCHEN SCHALTUNG
PROCESS FOR ACTING BY THERMOCAPILLARY CONVECTION ON A FLUID IN A MICROFLUIDIC CIRCUIT

(30) Priorité: 19.07.2004 FR 0407988
(43) Date de publication de la demande: 26.09.2007
(73) Titulaire: CENTRE NATIONAL DE LA RECHERCHE SCIENTIFIQUE (CNRS), 75794 Paris Cedex 16 (FR); Ecole Polytechnique, 91128 Palaiseau Cedex (FR)
(72) Inventeur: BAROUD, Charles, F-75006 Paris (FR); DELVILLE, Jean-Pierre, F-33400 Talence (FR); WUNENBURGER, Régis, 33400 Talence (FR); HUERRE, Patrick, F-75003 Paris (FR)
(74) Mandataire: Ramey, Daniel
(86) Numéro de dépôt international: PCT/FR2005/001756
(87) Numéro de publication internationale: WO 2006/018490

(56) Documents cités:
- WO-A-02/091028
- WO-A-2004/016948
- US-A1- 2002 031 835
- US-A1- 2002 181 837
- US-A1- 2003 047 688

## Description

L'invention concerne un circuit microfluidique comportant au moins un composant susceptible d'agir sur un fluide présent dans le circuit, notamment pour créer un écoulement de ce fluide dans le circuit, pour bloquer cet écoulement, pour le diriger et l'orienter et/ou pour mélanger le fluide à un autre fluide, entre autres.

La microfluidique pose un certain nombre de problèmes techniques qui n'ont pas reçu jusqu'à présent de solutions satisfaisantes, ces problèmes concernant le transport d'un fluide dans un microcanal, rendu difficile à cause de la réversibilité de la mécanique des fluides à petite échelle, et concernant également la réalisation de vannes susceptibles d'obturer de façon étanche des microcanaux.

On a déjà proposé de former des microcanaux dans un polymère flexible, sur lequel on applique une pression pour fermer un canal par écrasement et réaliser ainsi une microvanne. On peut également former une pompe du type péristaltique par une série de trois de ces microvannes qui sont actionnées suivant un ordre donné.

D'autres solutions connues utilisent un champ électrique pour déplacer un fluide ionisé (électro-osmose) ou des particules chargées (électrophorèse).

Une autre solution connue consiste à chauffer localement, au moyen de résistances électriques, une interface entre deux fluides non miscibles pour provoquer un mouvement d'un des fluides par convection thermocapillaire ou effet Marangoni.

Il a aussi été proposé de déplacer des matières et des fluides au moyen de billes piégées dans une « multi-pince optique » générée par un faisceau lumineux étroitement focalisé (travaux de K.LADAVAC et de D.GRIER).

Toutes ces solutions ont des inconvénients. Celles qui utilisent l'effet Marangoni ont l'avantage de créer un écoulement global du fluide, mais leur mise en oeuvre est délicate. Elle fait appel à des résistances électriques déposées sur un microcanal alimenté par un premier fluide, au voisinage du débouché d'un autre microcanal d'amenée d'un second fluide destiné à former une bulle dans le premier fluide. La ou les résistances électriques chauffent un côté de l'interface entre les deux fluides pour créer un gradient de température le long de cette interface, grâce auquel le premier fluide va se déplacer dans la direction des températures faibles, ce qui induit un mouvement global du fluide dans une direction déterminée (voir le document US-A-6 533 951).

Dans cette technique connue, les résistances chauffantes sont intégrées au circuit microfluidique lors de sa fabrication, de sorte que leurs caractéristiques et leurs emplacements ne sont pas modifiables. Cette intégration se traduit aussi par une augmentation du coût du circuit. De plus, s'il est facile de chauffer en alimentant les résistances électriques, rien n'est prévu pour refroidir et l'effet de pompage se poursuit un certain temps après l'arrêt de l'alimentation électrique des résistances, jusqu'à ce que celles-ci reviennent à température ambiante.

L'invention a pour objet un circuit microfluidique qui ne présente pas les inconvénients des circuits antérieurs connus.

Elle a également pour objet un circuit microfluidique qui soit adaptable et modifiable à volonté au niveau de ses composants qui agissent sur le fluide pour le mettre en mouvement, pour l'arrêter, pour le mélanger et pour le doser, entre autres.

Elle a encore pour objet un circuit microfluidique comportant des composants actifs du type précité, que l'on peut commander sans interaction directe avec le circuit lui-même et donc sans risque de dégradation ou de détérioration du circuit lors de la commande ou du fonctionnement des composants actifs.

Elle propose, à cet effet, un circuit microfluidique comprenant au moins un microcanal contenant un fluide et au moins un composant susceptible d'agir sur le fluide par convection thermocapillaire, caractérisé en ce qu'il comprend des moyens de focalisation d'un faisceau laser sur l'interface dudit fluide avec un second fluide, le microcanal étant formé dans un matériau transparent au faisceau laser et le second fluide étant au moins localement présent dans ce microcanal.

La focalisation du faisceau laser sur l'interface des deux fluides à travers le matériau transparent du microcircuit, permet d'agir sur cette interface sans agir sur le microcircuit lui-même et donc sans risque de dégradation ou d'usure de ce microcircuit. La focalisation du faisceau laser sur l'interface du des deux fluides est suffisante pour obtenir l'effet recherché et évite d'intégrer des composants électriques dans le microcircuit.

Cet effet peut consister, les deux fluides n'étant pas miscibles, en un déplacement du premier fluide dans une direction déterminée par le gradient de température à l'interface des deux fluides, et le faisceau laser remplit alors la fonction d'une pompe.

Selon une autre caractéristique de l'invention, le faisceau laser peut être focalisé sur l'interface des deux fluides dans une zone du premier microcanal située immédiatement en aval d'au moins un ou de deux seconds microcanaux qui débouchent face à face dans le premier microcanal et dans lesquels passent des débits du second fluide.

Le faisceau laser interdit alors l'écoulement du premier fluide dans le premier microcanal et remplit la fonction d'une vanne.

Cette vanne présente l'avantage de ne comporter aucun organe mobile. Sa commande est très simple et peut se limiter à un réglage de puissance d'émission du faisceau laser.

Selon encore une autre caractéristique de l'invention, le second fluide est formé par une bulle de gaz dans une zone de confluence du premier fluide et d'un troisième fluide miscibles l'un avec l'autre, et le faisceau laser est focalisé sur un solide qui peut être à l'origine de la formation de la bulle et qui permet de l'attacher.

La forme de la bulle change de façon très rapide et complexe pendant l'éclairage par le faisceau laser, ce qui induit des écoulements aléatoires dans le temps du premier et du troisième fluide à l'interface avec la bulle et réalise un mélange de ces deux fluides, qui sont quelconques, du même type ou de types différents.

L'invention permet ainsi de créer un mélangeur « chaotique » de deux ou plusieurs fluides et apporte une solution simple et efficace au problème du mélange de fluides en microfluidique, qui ne peut être résolu de façon classique en raison de l'impossibilité de former un écoulement turbulent à petite échelle.

Selon encore une autre caractéristique de l'invention, le faisceau laser peut être utilisé pour former un microdoseur fonctionnant sur le principe de la vanne précitée, en autorisant un écoulement du premier fluide pendant un intervalle de temps bref dans le premier microcanal.

On peut aussi utiliser le faisceau laser pour former des microgouttes en le faisant agir à des intervalles de temps prédéterminés sur l'écoulement du fluide dans le premier microcanal, les gouttes formées pouvant avoir des tailles différentes en fonction des durées d'action du faisceau laser sur l'écoulement.

On peut encore utiliser le faisceau laser pour orienter l'écoulement du fluide dans une direction particulière, et donc pour réaliser des tris ou des séparations de fluides différents.

La puissance du faisceau laser utilisé dans l'invention est typiquement de l'ordre de 10 à 50mW, cette puissance variant avec la nature des fluides ou des solutions utilisés. On prévoit aussi de changer la longueur d'onde du laser pour l'accorder sur la bande d'absorption d'un fluide considéré.

L'invention permet, au moyen d'un faisceau laser et de moyens de balayage rapide de zones prédéterminées d'un circuit microfluidique par ce faisceau laser, de réaliser un circuit comprenant des pompes, des vannes, des mélangeurs, des doseurs, la vitesse de déplacement du faisceau laser d'une zone à une autre étant grande par rapport au temps de réaction des fluides.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un dispositif à microcircuit fluidique selon l'invention ;
- la figure 2 est une représentation schématique, à grande échelle, d'une pompe selon l'invention ;
- la figure 3 est une vue schématique, à grande échelle, d'une vanne selon l'invention ;
- les figures 4 et 5 sont des vues schématiques à grande échelle d'une variante de réalisation d'une vanne ;
- la figure 6 est une vue schématique à grande échelle illustrant le fractionnement d'un jet en gouttes ;
- la figure 7 est une vue schématique à grande échelle d'un mélangeur selon l'invention ;
- les figures 8 et 9 représentent schématiquement des moyens d'orientation d'un écoulement ;
- la figure 10 représente schématiquement un circuit microfluidique selon l'invention, comportant une vanne, une pompe, un mélangeur et des moyens de séparation et de tri.

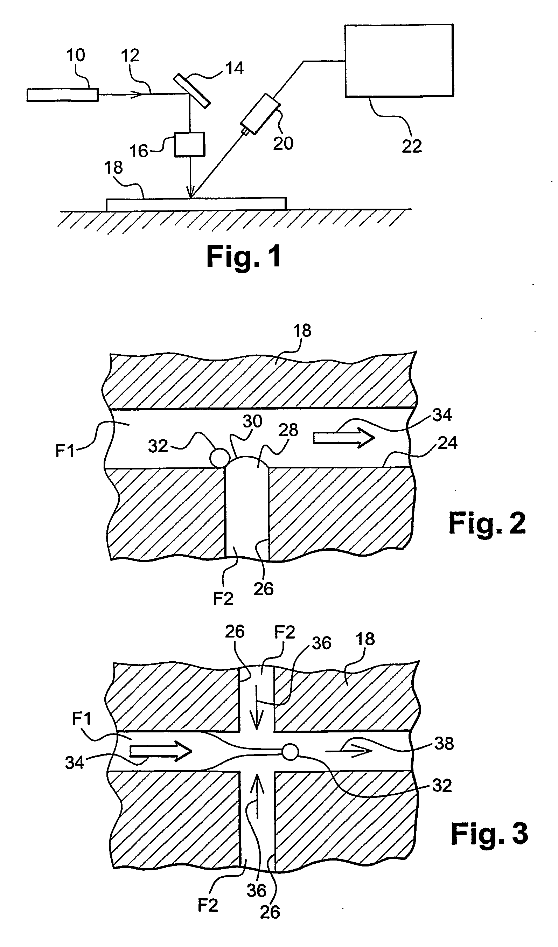

Le dispositif de la figure 1 comprend un générateur laser 10 tel par exemple qu'un générateur à argon ionisé à émission continue ou pulsée avec une fréquence de répétition supérieure à 1kHz environ, sur une longueur d'onde de 514 nm avec une puissance comprise entre 10 et 50mW, typiquement. On peut aussi utiliser une diode laser ou un laser du type YAG, par exemple.

Le faisceau laser 12 est guidé par des moyens 14 de renvoi vers un objectif de microscope 16 permettant de le focaliser avec précision dans une zone d'un microcanal d'un circuit microfluidique qui est formé par exemple dans une plaque 18 d'un matériau approprié, par exemple d'un polymère tel que du poly-diméthylsiloxane (PDMS) en utilisant une technique courante de lithographie souple.

Dans un exemple de réalisation, les microcanaux sont formés à la surface de la plaque 18 sur laquelle est collée une lame de microscope en verre.

Typiquement, les microcanaux ont une largeur de 100 µm environ et une profondeur de 50 µm. Ces dimensions peuvent toutefois être très largement variables entre une échelle nanométrique et une échelle millimétrique.

Une caméra 20 couplée à un objectif de microscope permet d'observer ce qui se passe dans le circuit 18 et de l'afficher sur l'écran 22 d'un système de traitement de l'information.

Avantageusement, et comme on le verra mieux dans la suite de la description, les moyens de renvoi 14 permettent de déplacer à vitesse élevée le point d'impact du faisceau laser sur le circuit 18 dans des zones prédéterminées, en fonction des commandes de composants actifs à réaliser tels notamment que des pompes, des vannes, des mélangeurs, des doseurs, des moyens d'orientation, de séparation et de tri, etc.

La figure 2 représente un exemple de réalisation d'une pompe permettant d'assurer un certain débit d'un premier fluide F1 dans un microcanal 24 du circuit 18 précité, grâce à un second fluide F2 non miscible avec le premier et qui est présent dans un second microcanal 26 ou une cavité du circuit 18, ce second microcanal 26 ou cette cavité débouchant dans le premier microcanal 24. Le second fluide F2 forme une goutte ou une bulle 28 dans le premier fluide F1 au débouché du second microcanal 26 et le faisceau laser 16 est focalisé sur une partie de l'interface 30 entre les deux fluides, par exemple dans la zone indiquée en 32 qui se trouve dans le microcanal 24 à l'extrémité amont de l'interface 30 par rapport à la direction 34 dans laquelle on souhaite déplacer le fluide F1.

La puissance d'émission du faisceau laser 12 est par exemple dans ce cas de l'ordre de 20 mW et la puissance utile au point d'impact 32 est de l'ordre du cinquième de cette puissance d'émission, les pertes dans les moyens de renvoi 14 étant relativement importantes. Les dimensions du point d'impact du faisceau laser dans la zone 32 sont par exemple d'environ 5 à 15 µm en diamètre, la dimension de la goutte 28 au débouché du microcanal 26 étant quelconque, par exemple comprise entre 10 et 500 µm environ.

Le réchauffement local de l'interface 30 au point 32 induit un mouvement du fluide F1 sur l'interface, qui se traduit par un mouvement global dans le fluide F1 depuis l'entrée du microcanal 24 jusqu'à l'interface 30. Les petites dimensions en microfluidique sont avantageuses pour deux raisons :
- la convection thermocapillaire dépend du gradient spatial de la température. Etant données les petites dimensions concernées, ce gradient peut être grand pour un écart faible en température,
- à de faibles nombres de Reynolds, le mouvement du fluide à l'interface 30 induit un mouvement dans le fluide loin de cette interface, de sorte que la convection thermocapillaire à l'interface a un effet global sur le fluide F1.

Des essais réalisés avec un fluide F1 qui est un mélange d'eau et de fluorescéine à une concentration d'environ 5% en masse, ou qui est de l'air, avec un fluide F2 qui est une solution d'hexadécane et d'un surfactant tel que celui connu sous la dénomination Span 80, avec une concentration de 2% en masse, ont conduit aux résultats suivants, lorsque la puissance du faisceau laser 12 est de l'ordre de 20 mW :
- lorsque le fluide F1 est de l'air, la vitesse d'écoulement peut atteindre 500µm/s dans le microcanal 24,
- lorsque le fluide F1 est une solution de fluorescéine dans l'eau, la vitesse est plus faible et atteint environ 50µm/s.

La figure 3 représente schématiquement le cas où le composant actif formé par le faisceau laser 12 focalisé sur le circuit 18 est une vanne.

Dans ce cas, le microcanal 24 du circuit 18 est parcouru par un débit du fluide F1 dans le sens indiqué par la flèche 34 et est coupé à angle droit par deux microcanaux 26 qui débouchent face à face dans le microcanal 24 et qui sont chacun parcourus par un écoulement d'un second fluide F2 dans le sens indiqué par une flèche 36, les écoulements de fluide F2 rejoignant le microcanal 24 et s'écoulant ensuite vers l'aval comme indiqué par une flèche 38.

Le faisceau laser 12 est focalisé sur l'interface du premier fluide F1. avec le fluide F2 immédiatement en aval du débouché des microcanaux 26, comme indiqué en 32, ce qui a pour effet d'arrêter à peu près instantanément l'écoulement du fluide F1.

Les écoulements du second fluide F2 dans les microcanaux 26 et dans le microcanal 24 ne sont apparemment pas modifiés.

L'intervalle de temps pendant lequel on peut bloquer l'écoulement du fluide F1 est plus ou moins long, en fonction de la position du point d'impact 32 du faisceau laser et du débit de fluide F1 dans le microcanal 24.

De façon typique, cette durée est de plusieurs secondes et peut dépasser 10 secondes.

Lorsque le microcanal 24 est alimenté en fluide F1 par une pression de ce fluide, et non par un débit imposé, le blocage de l'écoulement du fluide F1 dans le microcanal 24 peut durer indéfiniment.

Comme déjà indiqué, la dimension du point d'impact du faisceau laser peut être de l'ordre de 10µm environ, la puissance d'émission du faisceau laser étant comprise entre 20 et 40mW environ.

Lorsque l'indice de réfraction du premier fluide est supérieur à celui du second fluide, un effet de « piège optique » peut s'ajouter à l'effet de blocage d'écoulement produit par la focalisation du faisceau laser sur l'interface des fluides. Cet effet de piège optique d'origine dipolaire peut aussi être utilisé pour mettre en oeuvre la vanne ou pour guider l'interface entre les deux fluides.

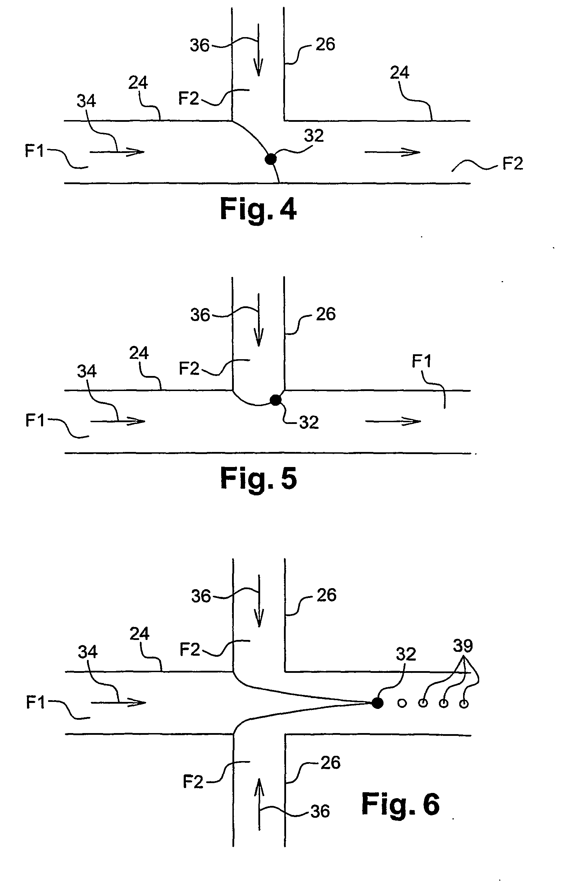

Une variante de réalisation d'une vanne est représentée aux figures 4 et 5, dans lesquelles le second fluide F2 s'écoule dans le sens de la flèche 36 dans un seul microcanal 26 débouchant perpendiculairement dans le microcanal 24 contenant le premier fluide F1 qui s'écoule dans le sens de la flèche 34.

Quand le faisceau laser est focalisé en 32 sur l'interface des deux fluides comme indiqué en figure 4, c'est-à-dire légèrement en aval de l'axe du microcanal 26 et du côté opposé à ce microcanal par rapport à l'axe du microcanal 24, il bloque l'écoulement du premier fluide F1 et permet l'écoulement du second fluide F2.

Inversement, comme représenté en figure 5, si le faisceau laser est focalisé en 32 au débouché du microcanal 26 dans le microcanal 24, il bloque l'écoulement du second fluide F2 et laisse passer le premier fluide F1 vers l'aval dans le microcanal 24.

En figure 6, le faisceau laser est focalisé en 32 sur l'interface d'un jet axial du premier fluide F1 dans le second fluide F2, en aval du croisement du microcanal 24 avec deux microcanaux 26 dans lesquels circule le second fluide F2.

L'allumage et l'extinction répétés du laser provoquent le fractionnement du jet de fluide F1 en gouttes 39 dans l'écoulement de fluide F2 par une instabilité de Rayleigh-Plateau, la dimension des gouttes étant fonction du rapport entre la fréquence du forçage laser et la vitesse de l'écoulement.

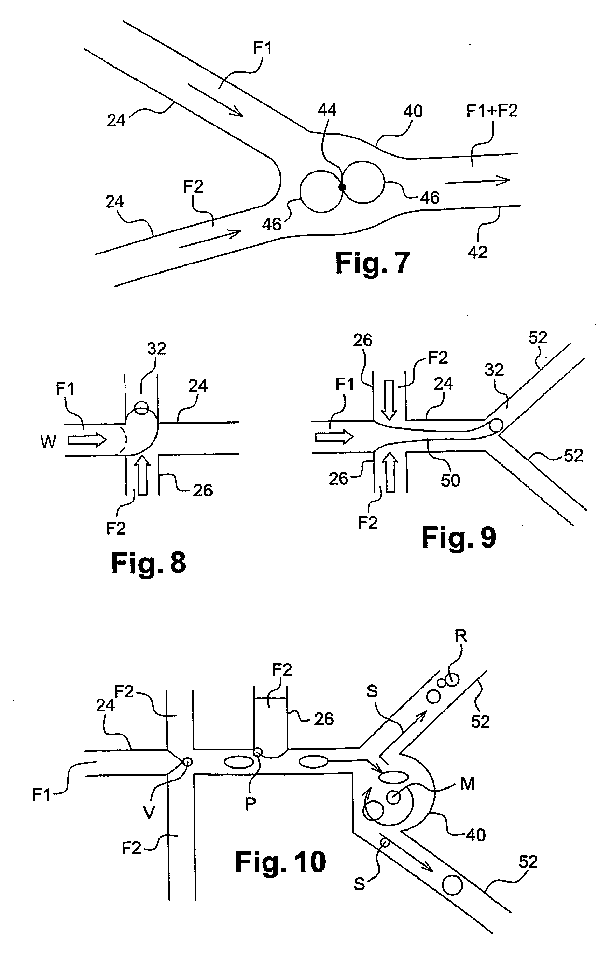

La figure 7 représente le cas où le faisceau laser est utilisé pour former un mélangeur de deux fluides miscibles au confluent de deux microcanaux 24 dont l'un est parcouru par un écoulement d'un fluide F1 dans le sens indiqué par la flèche et l'autre par un écoulement d'un autre fluide F2 dans le sens indiqué par la flèche, les deux microcanaux 24 se rejoignant dans une chambre 40 dont le mélange de fluide F1 + F2 peut sortir par un microcanal 42.

Pour réaliser le mélange des deux fluides, le faisceau laser 12 est focalisé sur une particule 44 de matière solide qui se trouve dans la chambre 40 à la confluence des microcanaux 24 et qui peut générer ou libérer une ou des bulles de gaz 46, par exemple des bulles d'air, quand elle est chauffée par le faisceau laser 12.

Cette ou ces bulles 46 restent attachées à la particule solide 44 qui peut être à surface rugueuse. En variante, la ou les bulles 46 peuvent être présentes sur la particule solide 44 avant chauffage de celle-ci par le faisceau laser 12.

Quand la particule solide 44 est chauffée par le faisceau laser, la forme de la ou de chaque bulle 46 change de façon très complexe et très rapide et un écoulement est induit sur l'interface de cette bulle et de chaque fluide F1 et F2. Il en résulte un écoulement aléatoire dans le temps des fluides F1 et F2, ce qui se traduit par un bon mélange de ces fluides.

La particule solide peut être un cristal de fluorescéine, une bille de polymère (de PDMS par exemple) ou tout corps noir, par exemple une particule de noir de carbone, ayant une bonne résistance aux conditions opératoires.

Ses dimensions peuvent être de l'ordre de 10µm.

Le faisceau laser peut également être utilisé pour modifier la direction de l'écoulement d'un fluide dans des microcanaux du circuit 18.

La figure 8 représente le cas où un premier fluide F1 circule dans un microcanal 24 qui est coupé à angle droit par un second microcanal 26 dans lequel circule un autre fluide F2. Si l'on place le point d'impact 32 du faisceau laser 12 immédiatement en aval du croisement des microcanaux, dans le second microcanal 26, on va amener le premier fluide F1 à changer de direction et à s'écouler dans la partie aval du second microcanal 26.

La figure 9 représente le cas où un premier fluide F1 circule dans un premier microcanal 24 dans lequel débouchent, face à face, deux microcanaux 26 parcourus par un écoulement d'un second fluide F2.

En aval du croisement des microcanaux 24 et 26, le fluide F1 forme une veine centrale qui s'écoule à l'intérieur du fluide F2 jusqu 'à une zone de bifurcation du microcanal 24 qui se sépare en deux microcanaux 52.

Si l'on focalise le faisceau laser 12 en un point 32 qui est situé sur la veine 50 à l'extrémité amont d'un des deux microcanaux 52, on va dévier cette veine 50 vers ce microcanal 52 et l'empêcher de passer dans l'autre microcanal 52.

In est également possible de déplacer rapidement le faisceau laser 12 sur différentes zones prédéterminées d'un circuit 18 pour réaliser un certain nombre de fonctions dans ces différentes zones, en profitant du temps de réaction du fluide qui peut être relativement important par comparaison à la vitesse de déplacement du faisceau laser, par exemple au moyen d'un miroir à commande galvanométrique ou piézo-électrique.

Comme représenté schématiquement en figure 10, on peut ainsi former une vanne V par focalisation du faisceau laser dans la zone d'intersection d'un premier microcanal 24 parcouru par un écoulement d'un premier fluide F1 et de deux microcanaux 26 parcourus par des écoulements d'un second fluide F2, puis en aval former une pompe P par focalisation du faisceau laser au débouché d'un troisième microcanal 26 contenant du fluide F2 et, en aval, réaliser un mélangeur M par focalisation du faisceau laser sur une particule solide et faire un tri au moyen de séparateurs S formés par focalisation du faisceau laser aux extrémités amont de deux microcanaux 52 partant de la chambre de mélange 40.

Lorsque des gouttes d'un des fluides se suivent dans un microcanal 52, on peut les rassembler par focalisation du faisceau laser en R sur l'interface d'une de ces gouttes, comme représenté schématiquement en figure 10.

## Revendications

1. Procédé pour agir par convection thermocapillaire sur un fluide contenu dans un microcanal (24) d'un circuit microfluidique , **caractérisé en ce qu'**il consiste à générer une convection thermocapillaire dans le fluide par focalisation d'un faisceau laser (12) sur l'interface dudit fluide (F1) avec un second fluide (F2), le microcanal (24) étant formé dans un matériau transparent audit faisceau laser (12) et le second fluide (F2) étant au moins localement présent dans ce microcanal (24).

2. Procédé selon la revendication 1, **caractérisé en ce que** ladite interface est formée entre le premier fluide (F1) et une bulle ou une goutte du second fluide (F2).

3. Procédé selon la revendication 1 ou 2, **caractérisé en ce que** le second fluide (F2) est contenu dans au moins un second microcanal (26) ou une cavité débouchant dans le premier microcanal (24) contenant le premier fluide (F1).

4. Procédé selon la revendication 3, **caractérisé en ce que** les deux fluides sont non miscibles et la focalisation du faisceau laser (12) sur l'interface précitée forme une pompe générant un écoulement du premier fluide (F1) dans le premier microcanal (24).

5. Procédé selon la revendication 1 ou 2, **caractérisé en ce que** le second fluide (F2) est contenu dans deux seconds microcanaux (26) débouchant face à face dans le premier microcanal (24) contenant le premier fluide (F1).

6. Procédé selon la revendication 3 ou 5, **caractérisé en ce que** les deux fluides sont non miscibles et la focalisation du faisceau laser (12) sur l'interface des deux fluides dans une zone (32) située à l'intersection du premier microcanal (24) et du ou des seconds microcanaux (26) forme une vanne interdisant l'écoulement du premier fluide (F1) dans le premier microcanal (24).

7. Procédé selon la revendication 2, **caractérisé en ce qu'**une bulle de gaz est située dans le circuit, dans une zone de confluence du premier fluide (F1) et d'un autre fluide (F2) miscible avec le premier fluide et **en ce que** le mélange de ces fluides est réalisé par la focalisation du faisceau laser (12) sur l'interface de cette bulle avec lesdits fluides.

8. Procédé selon la revendication 7, **caractérisé en ce que** ladite bulle (46) est accrochée sur une particule solide (44) sur laquelle le faisceau laser (12) est focalisé.

9. Procédé selon la revendication 8, **caractérisé en ce que** ladite bulle (46) est créée sur la particule solide (44) par le faisceau laser (12).

10. Procédé selon l'une des revendications précédentes, **caractérisé en ce que** plusieurs composants actifs sont formés par focalisation du faisceau laser précité, des emplacements de ces composants étant balayés rapidement par le faisceau laser (12), lesdits composants étant choisis dans le groupe comportant les pompes, les vannes, les doseurs, les mélangeurs, les séparateurs et les moyens d'orientation.

11. Procédé selon l'une des revendications précédentes, **caractérisé en ce que** les moyens (16) de focalisation du faisceau laser (12) forment sur l'interface du premier et du second fluide précités un point (32) ayant un diamètre compris entre 5 et 15 µm environ.

12. Procédé selon l'une des revendications précédentes, **caractérisé en ce que** l'émission du faisceau laser (12) est continue ou pulsée avec un fréquence de répétition supérieure à 1kHz environ et sa puissance d'émission est comprise entre 10 et 50 mW environ.

## Claims

1. Process to act by thermocapillary convection on a fluid contained in a microchannel (34) of a microfluidic circuit, **characterized in that** it consists in generating a thermocapillary convection in the fluid by focusing a laser beam (12) on the interface between said fluid (F1) and a second fluid (F2), the microchannel (24) being formed in a material that is transparent to said laser beam (12), and the second fluid (F2) being present at least locally in said microchannel (24).

2. Process according to claim 1, **characterized in that** said interface is formed between the first fluid (F1) and a bubble or a drop of the second fluid (F2).

3. Process according to claim 1 or claim 2, **characterized in that** the second fluid (F2) is contained in at least one second microchannel (26) or a cavity opening out into the first microchannel (24) containing the first fluid (F1).

4. Process according to claim 3, **characterized in that** the two fluids are not miscible and focusing the laser beam (12) on the said interface forms a pump that generates a flow of the first fluid (F1) in the first microchannel (24).

5. Process according to claim 1 or claim 2, **characterized in that** the second fluid (F2) is contained in two second microchannels (26) opening out face to face into the first microchannel (24) containing the first fluid (F1).

6. Process according to claim 3 or claim 5, **characterized in that** the two fluids are not miscible and focusing the laser beam (12) on the interface between the two fluids in a zone (32) situated at the intersection of the first microchannel (24) and the second microchannel(s) (26) forms a valve preventing the first fluid (F1) from flowing in the first microchannel (24).

7. Process according to claim 2, **characterized in that** a bubble of gas is situated in the circuit, in a zone of confluence between the first fluid (F1) and another fluid (F2) that is miscible with the first fluid, and **in that** the mixing of these fluids is obtained by focusing the laser beam (12) on the interface of said bubble with said fluids.

8. Process according to claim 7, **characterized in that** said bubble (46) is held on a solid particle (44) onto which the laser beam (12) is focused.

9. Process according to claim 8, **characterized in that** said bubble (46) is created on the solid particle (44) by the laser beam (12).

10. Process according to any preceding claim, **characterized in that** a plurality of active components is formed by focusing said laser beam, locations of said components being rapidly scanned with the laser beam (12), said components being selected from the group comprising: pumps, valves, measuring means, mixers, separators, and steering means.

11. Process according to any preceding claim, **characterized in that** the means (16) for focusing the laser beam (12) form a spot (32) on the interface between the said first and second fluids, the spot having a diameter lying in the range about 5 µm to about 15 µm.

12. Process according to any preceding claim, **characterized in that** the emission of the laser beam (12) is continuous or pulsed with a repetition of frequency greater than about 1 kHz, and its emission power lies in the range about 10 mW to about 50 mW.

## Patentansprüche

1. Verfahren zum Einwirken auf eine Flüssigkeit, die in einem Mikrokanal (24) eines mikrofluidischen Kreislaufs enthalten ist, durch thermokapillare Konvektion, **dadurch gekennzeichnet, dass** das Verfahren in dem Erzeugen einer thermokapillaren Konvektion in der Flüssigkeit durch Fokussierung eines Laserstrahls (12) auf die Grenzfläche der Flüssigkeit (F1) mit einer zweiten Flüssigkeit (F2) besteht, wobei der Mikrokanal (24) in einem für den Laserstrahl (12) durchlässigen Material ausgebildet ist und die zweite Flüssigkeit (F2) mindestens stellenweise in diesem Mikrokanal (24) vorhanden ist.

2. Verfahren nach Anspruch 1, **dadurch gekennzeichnet, dass** die Grenzfläche zwischen der ersten Flüssigkeit (F1) und einer Blase oder einem Tropfen der zweiten Flüssigkeit (F2) gebildet ist.

3. Verfahren nach Anspruch 1 oder 2, **dadurch gekennzeichnet, dass** die zweite Flüssigkeit (F2) in mindestens einem zweiten Mikrokanal (26) oder einem Hohlraum, der in den ersten Mikrokanal (24) mündet, der die erste Flüssigkeit (F1) enthält, enthalten ist.

4. Verfahren nach Anspruch 3, **dadurch gekennzeichnet, dass** die zwei Flüssigkeiten nicht mischbar sind und die Fokussierung des Laserstrahls (12) auf die vorgenannte Grenzfläche eine Pumpe bildet, die einen Abfluss der ersten Flüssigkeit (F1) in den ersten Mikrokanal (24) erzeugt.

5. Verfahren nach Anspruch 1 oder 2, **dadurch gekennzeichnet, dass** die zweite Flüssigkeit (F2) in zwei zweiten Mikrokanälen (26) enthalten ist, die gegenüberliegend in den ersten Mikrokanal (24) münden, der die erste Flüssigkeit (F1) enthält.

6. Verfahren nach Anspruch 3 oder 5, **dadurch gekennzeichnet, dass** die zwei Flüssigkeiten nicht mischbar sind und die Fokussierung des Laserstrahls (12) auf die Grenzfläche der zwei Flüssigkeiten in einer Zone (32), die sich an dem Schnittpunkt des ersten Mikrokanals (24) und des oder der zweiten Mikrokanäle (26) befindet, ein Ventil bildet, das den Abfluss der ersten Flüssigkeit (F1) in den ersten Mikrokanal (24) verhindert.

7. Verfahren nach Anspruch 2, **dadurch gekennzeichnet, dass** sich eine Gasblase in dem Kreislauf in einer Zone des Zusammenflusses der ersten Flüssigkeit (F1) und einer anderen Flüssigkeit (F2), die mit der ersten Flüssigkeit mischbar ist, befindet und das Gemisch dieser Flüssigkeiten durch Fokussierung des Laserstrahls (12) auf die Grenzfläche dieser Blase mit den Flüssigkeiten hergestellt wird.

8. Verfahren nach Anspruch 7, **dadurch gekennzeichnet, dass** die Blase (46) an einem festen Teilchen (44) hängt, auf das der Laserstrahl (12) fokussiert wird.

9. Verfahren nach Anspruch 8, **dadurch gekennzeichnet, dass** die Blase (46) mit dem Laserstrahl (12) auf dem festen Teilchen (44) erzeugt wird.

10. Verfahren nach einem der vorhergehenden Ansprüche, **dadurch gekennzeichnet, dass** mehrere aktive Komponenten durch Fokussierung des oben genannten Laserstrahls gebildet werden, wobei Stellen dieser Komponenten schnell mit dem Laserstrahl (12) abgetastet werden, wobei die Komponenten aus der Gruppe ausgewählt sind, die Pumpen, Ventile, Dosierer, Mischer, Abscheider und Ausrichtungsmittel umfasst.

11. Verfahren nach einem der vorhergehenden Ansprüche, **dadurch gekennzeichnet, dass** die Mittel (16) zur Fokussierung des Laserstrahls (12) auf der Grenzfläche der vorgenannten ersten und zweiten Flüssigkeit einen Punkt (32) mit einem Durchmesser zwischen ungefähr 5 und 15 µm bilden.

12. Verfahren nach einem der vorhergehenden Ansprüche, **dadurch gekennzeichnet, dass** die Emission des Laserstrahls (12) kontinuierlich oder gepulst mit einer Folgefrequenz von mehr als ungefähr 1 kHz ist und dessen Emissionsleistung zwischen ungefähr 10 und 50 mW liegt.
